(19) Europäisches Patentamt
European Patent Office
Office européen des brevets

(11) **EP 2 647 014 B1**

(12) **EUROPÄISCHE PATENTSCHRIFT**

(45) Veröffentlichungstag und Bekanntmachung des Hinweises auf die Patenterteilung:
**22.01.2020  Patentblatt 2020/04**

(21) Anmeldenummer: **11782053.0**

(22) Anmeldetag: **02.11.2011**

(51) Int Cl.:
**C09D 5/24** (2006.01)

(86) Internationale Anmeldenummer:
**PCT/EP2011/005522**

(87) Internationale Veröffentlichungsnummer:
**WO 2012/072174 (07.06.2012 Gazette 2012/23)**

(54) **DIELEKTRISCHE BESCHICHTUNGEN UND GEGENSTÄNDE**

DIELECTRIC COATINGS AND OBJECTS

REVÊTEMENTS ET OBJETS DIÉLECTRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2010  DE 102010052889**

(43) Veröffentlichungstag der Anmeldung:
**09.10.2013  Patentblatt 2013/41**

(73) Patentinhaber: **Merck Patent GmbH
64293 Darmstadt (DE)**

(72) Erfinder:
• **RUEGER, Reinhold
63322 Roedermark (DE)**
• **KUNTZ, Matthias
64342 Seeheim-Jugenheim (DE)**

(56) Entgegenhaltungen:
EP-B1- 1 118 086     WO-A2-2009/077122
DE-A1- 4 237 990     US-A- 4 207 482

**Beschreibung**

Die vorliegende Erfindung betrifft dielektrische Beschichtungen und Gegenstände mit hohen, aber genau definierten spezifischen Oberflächenwiderständen.

In vielen Anwendungen mit dielektrischen Beschichtungen oder hauptsächlich aus dielektrischen Materialien bestehenden Gegenständen wie Kunststoffteilen, Folien oder Bändern, ist es notwendig, die elektrischen Eigenschaften der Materialien gezielt zu verändern. Dies geschieht meist durch Einsatz geeigneter Additive, wie z. B. Füllstoffe oder Pigmente, mit entsprechenden Eigenschaften.

So ist beispielsweise bekannt, die elektrische Leitfähigkeit von Schichten aus dielektrischen Bindemitteln durch Zusatz leitfähiger Pigmente stark zu erhöhen, wie z.B. bekannt aus der EP 1 118 086 B1 und US 4,207,482.

Elektrisch leitfähige Pigmente werden heute in verschiedenen Anwendungsbereichen eingesetzt, so z. B. für antistatische Beschichtungen, antistatische Fußbodenbeläge, antistatische Ausrüstungen explosionsgeschützter Räume oder elektrisch leitfähige Grundierungen für das Lackieren von Kunststoffen.

In diesen Anwendungen sind niedrige Oberflächen- und Durchgangswiderstände notwendig, um einen betriebssicheren elektrischen Zustand zu gewährleisten. Bezüglich der verwendeten Pigmente besteht daher die Forderung nach einer möglichst guten Leitfähigkeit. Meist werden Ruß oder Graphit eingesetzt um die Leitfähigkeit der dielektrischen Materialien zu erhöhen. Diese Stoffe erfüllen die Anforderung einer hohen Leitfähigkeit, haben aber den Nachteil, dass sie schwarz sind und damit immer zur Dunkelfärbung der damit versetzten Materialien führen. Dieser Lösungsansatz ist daher auf dunkle bis schwarze Anwendungen beschränkt und wegen dieser Einschränkung nicht immer praktikabel.

Für die Herstellung heller und transparenter Beschichtungen sind elektrisch leitfähige Pigmente auf Basis transparenter plättchenförmiger Substrate bekannt. Diese Pigmente bestehen z. B. aus Glimmer beschichtet mit $(Sn,Sb)O_2$ oder mit einer Schichtenfolge aus $TiO_2/SiO_2/(Sn,Sb)O_2$ (z. B. Minatec® 31 CM oder 30 CM der Fa. Merck KGaA). In einem Beispiel besteht das Substrat aus einem Gemisch aus Glimmer und sphärischen $SiO_2$-Partikeln. Derartige Pigmente, die von der Merck KGaA hergestellt und vertrieben werden, sind z. B. in den Patenten DE 38 42 330 und DE 42 37 990 (Merck), EP 0 139 557 (Catalysts & Chemicals Ind.) oder EP 0 359 569 und EP 0 743 654 (DuPont) und U.S. 7,416,688 (Merck) beschrieben. Solche Pigmente sind transparent, haben eine helle Körperfarbe und weisen eine hohe Leitfähigkeit auf. Mit diesen Pigmenten sind helle bzw. transparente leitfähige Beschichtungen mit spezifischen Oberflächenwiderständen im Kiloohm-Bereich zugänglich. Die Werte gelten für Gleichspannung und niederfrequente Wechselspannung. Als spezifischer Oberflächenwiderstand $\sigma$ wird der auf ein Quadrat bezogene, auf einer Fläche gemessene Widerstand bezeichnet. Eine andere gebräuchliche Bezeichnung ist Quadratwiderstand.

Diese Pigmente zeichnen sich gegenüber dem heute hauptsächlich gebräuchlichen leitfähigen Pigment Ruß dadurch aus, dass sie eine helle Farbe und eine höhere Transparenz aufweisen. Damit können Farbe und elektrische Leitfähigkeit in sehr guter Art und Weise kombiniert werden, während man beim Einsatz von Ruß immer auf dunkle Farben eingeschränkt ist. Im Gegensatz zu Ruß oder Graphit bieten die Pigmente zudem die Möglichkeit, die Leitfähigkeit über die Zusammensetzung und die Wahl der Herstellparameter einzustellen.

Mit den Pigmenten lassen sich leitfähige, antistatische und antistatisch dissipative Beschichtungen herstellen, die spezifische Oberflächenwiderstände im Bereich von ca. 100 Ohm bis 100 Megaohm aufweisen. In den meisten Anwendungen ist ein niedriger Widerstand erwünscht, vorzugsweise zwischen 1 kOhm und 1 Megaohm. Sind aber Widerstände im höherohmigen Bereich erforderlich, dann werden diese durch Anpassung der Formulierung, meist durch Verminderung der Einsatzmenge des leitfähigen Pigmentes oder Zugabe eines elektrisch nichtleitenden Füllers eingestellt. Bei Rußen oder Graphiten, aber auch anderen leitfähigen anorganischen Materialien, wie z. B. SiC, ist dies die einzige Möglichkeit zur Steuerung der Widerstände der Schicht oder des Volumens der leitfähigen dielektrischen Zubereitung. Im Bereich der höheren Widerstände über 100 Megaohm (niedrigere Leitfähigkeiten, teilleitfähige Schichten) ist deshalb die Formulierung geeigneter Zubereitung schwierig, weil das System aus dielektrischem Bindemittel und dem leitfähigen Pigment sich im steilen Bereich der Perkolationskurve befindet und geringste Veränderungen der Einsatzkonzentration, der Feuchte, Lösungsmittelgehalte, Licht oder der Homogenität des Systems zu gravierenden Änderungen der Leitfähigkeit führen. Die Einstellung und Einhaltung eines definierten Widerstandes der Beschichtung oder eines Volumens ist damit äußerst schwierig.

Zudem sind die elektrischen Wechselwirkungen in den heterogenen und mikroskopisch inhomogenen Systemen aus dielektrischem Bindemittel, ggf. Additiven und leitfähigem Pigment äußerst komplex und können nicht durch das vereinfachte Schaltbild in Serie und parallel geschalteter ohmscher Widerstände dargestellt werden. Vielmehr spielen die Dielektrizitätskonstante und Durchschlagsfestigkeit des Bindemittelsystems im mikroskopischen Bereich und die Impedanz auch eine wesentliche Rolle, ganz besonders im Grenzbereich der Perkolationsschwelle für das leitfähige Pigment und darunter. Ein Effekt dieser komplexen elektrischen Wechselwirkungen ist, dass die Frequenzabhängigkeit der Leitfähigkeit in diesem Konzentrationsbereich der leitfähigen Pigmente stark zunimmt und der Widerstand sehr stark schwanken kann. Durch die thermische Ausdehnung der Bindermatrix ergibt sich auch eine starke Temperaturabhängigkeit der elektrischen Größen. Auch andere Quell- oder Schrumpfprozesse, z. B. durch fortschreitende Vernetzung, durch Ausdünstung oder Ausschwitzen von Weichmachern oder Lösemitteln oder Aufnahme von Lösungsmittel- oder Wasserdampf können zu erheblichen Änderungen der elektrischen Eigenschaften führen.

Es können aber auch irreversible Prozesse auftreten, wenn sich beispielsweise die Eigenschaften durch einmaliges Anlegen eines elektrischen Feldes oder durch Temperatureinflüsse Mikrostrukturen verändern.

Niedrige Widerstandswerte werden in den pigmenthaltigen Materialien dann erreicht, wenn die Pigmentvolumentkonzentration in der dielektrischen Matrix oberhalb der Perkolationsschwelle liegt. Die Perkolationsschwelle ist die Mindestkonzentration an leitfähigem Pigment in einem Dielektrikum, bei der durchgängige Leitpfade ausgebildet werden können. In diesem Konzentrationsbereich ändert sich der elektrische Widerstand des Materials um mehrere Zehnerpotenzen bei geringen Änderungen der Pigmentvolumenkonzentration. Typischerweise liegt diese Schwelle bei 10 - 20 Vol.% an Pigment in der Zubereitung. Liegt die Pigmentvolumenkonzentration unterhalb dieser Schwelle, wird der elektrische Widerstand im Wesentlichen vom dielektrischen Matrixwerkstoff bestimmt. Spezifische Oberflächenwiderstände solcher Materialien in Form von Lacken oder Formkörpern liegen in trockener Atmosphäre typischerweise im Teraohm-Bereich.

Beschichtungen oder Funktionswerkstoffe mit spezifischen Oberflächenwiderständen im Bereich von $10^8$ bis $10^{13}$ Ohm sind z. B. in der Hochspannungstechnik oder in Sensorelementen von großem Interesse.

Halbleitende Funktionswerkstoffe mit nichtlinearen Eigenschaften werden in der Elektrotechnik gezielt zur Steuerung der Funktion elektrischer Bauteile eingesetzt. Beispiel für eine nichtlineare Eigenschaft ist ein spannungsabhängiger Widerstand. Anwendungen dieser Art sind z. B. bei Andreas Küchler "Hochspannungstechnik", Springer Verlag, 3. Auflage, 2009 oder in den ETG-Fachberichten 110 und 112, 3. ETG-Fachtagung, Würzburg, 2008, beschrieben. Materialien mit spannungsabhängigem Widerstand sind beispielsweise als Varistoren im Gebrauch.

Halbleitende Beschichtungen und Bänder mit spannungsabhängigem Widerstand werden zur elektrischen Feldsteuerung an Hochspannungsisolierungen eingesetzt, z. B. zur resistiven Feldsteuerung in Kabelgarnituren. Stand der Technik sind Komposite aus Siliziumcarbid und dielektrischen Bindemitteln in Form von Lacken oder Bändern.

Hier besteht ein ständiger Bedarf an verbesserten Materialeigenschaften. In der DE 19839285 wird vorgeschlagen, mit antimondotiertem Zinnoxid beschichtete leitfähige Pigmente in Bändern für den Endenglimmschutz in Generatoren einzusetzen. Bei der Erfindung werden Pigmente mit hoher Leitfähigkeit eingesetzt, die Dosierungen liegen im Bereich der Perkolationsschwelle. Die Pigmente enthalten 12 bis 15 Mol% Antimon im antimondotieren Zinnoxid. Der Widerstand der Bänder wird über die Konzentration der Pigmente in der Harzmatrix eingestellt.

Spezifische Widerstände im Bereich von $10^8$ bis $10^{13}$ Ohm sind mit leitfähigen Pigmenten hoher Leitfähigkeit aber nur schwer einstellbar, weil für die hohen Widerstände der Funktionswerkstoffe die Zubereitungen mit Pigmentkonzentrationen im Bereich der Perkolationsschwelle formuliert werden müssen. In diesem Konzentrationsbereich treten sprunghafte Änderungen der elektrischen Eigenschaften auf. Geringe Konzentrationsschwankungen, Vernetzungsgrad, Restlösemittel- oder Wassergehalte oder auch externe Parameter, wie z. B. Temperatur, können den Widerstand des Funktionswerkstoffs um mehrere Zehnerpotenzen schwanken lassen. Ein stabiler Zustand kann nur mit großem Aufwand eingestellt und aufrecht erhalten werden. Die Methode, über niedrige Konzentrationen an leitfähigem Pigment hohe Widerstände in dem dielektrischen Werkstoff genau zu steuern, ist in der Praxis nicht geeignet. Es besteht daher ein dringender Bedarf an Pigmenten, mit denen halbleitende Funktionswerkstoffe mit gut einstellbaren und stabilen elektrischen Eigenschaften zugänglich sind.

Für spezielle Anwendungen teilleitfähiger Beschichtungen, z. B. zur Potentialsteuerung in elektrischen Anlagen, sind aber definiert hochohmige Schichten (teilleitfähige Schichten) erforderlich, Schwankungen der Widerstände oder gar irreversible Änderungen durch Einwirkung elektrischer Felder nicht tolerabel.

Aufgabe der vorliegenden Erfindung ist es Zusammensetzungen aus dielektrischen Bindemitteln, ggf. weiteren dielektrischen Additiven und halbleitenden Pigmenten zu finden, die definierte elektrische Eigenschaften haben. Vorzugsweise sollen die Beschichtungen hell oder transparent sein. Weiterhin sollen die Beschichtungen eine möglichst geringe Frequenzabhängigkeit der Widerstände aufweisen.

Überraschenderweise wurde nun gefunden, dass helle dielektrische Beschichtungen und Gegenstände gemäß Anspruch 1 enthaltend halbleitende Pigmente, dielektrisches Bindemittel und ggf. weitere dielektrische Additive, mit hohen definierten spezifischen Oberflächenwiderständen größer oder gleich $10^8$ Ohm hergestellt werden können, wenn die Pigment-volumentkonzentration des halbleitenden Pigmentes in der dielektrischen Beschichtung bzw. in dem Gegenstand 10 % oder höher ist.

In einer bevorzugten Ausführungsform ist

- der spezifische Pulverwiderstand der Pigmente größer als 100 kOhm · cm und kleiner 1 Gigaohm · cm ist, und

- das halbleitende Pigment besteht aus Zinnoxid, dotiertem Zinndioxid, mit Zinnoxid oder dotiertem Zinndioxid beschichteten Trägern, dotiertem Titandioxid, Titansuboxid oder mit Titandioxid oder Titansuboxid beschichteten Trägern.

Unter halbleitfähige Pigmente sind in dieser Patentanmeldung Pigmente mit folgenden Eigenschaften zu ver-

EP 2 647 014 B1

stehen: Im Unterschied zu leitfähigen Pigmenten, die spezifische Pulverwiderstände von weniger als 100 KOhm*cm, vorzugsweise weniger als 1 KOhm*cm aufweisen, liegt der spezifische Pulverwiderstand der halbleitfähigen Pigmente im Bereich von 100 kOhm*cm bis 100 Megaohm*cm. Der Widerstandsbereich einer halbleitende Pigmente enthaltenden Beschichtung liegt im unteren Widerstandsbereich von Isolierstoffen mit spezifischen Widerständen im Mega- bis Teraohm-Bereich.

Die elektrischen Eigenschaften der halbleitenden Pigmentpulver werden durch den spezifischen Pulverwiderstand charakterisiert. Zur Messung des spezifischen Widerstandes eines Pigmentpulvers wird ein Acrylglas-Rohr mit dem Innendurchmesser von 2 cm mit einer Füllhöhe 0,5 bis 1 cm des Pigmentes gefüllt, das zwischen zwei gegenüberliegenden Metallstempeln mit Hilfe eines Gewichtes von 10 kg zusammengepresst wird. Durch Anlegen eines Ohmmeters an die beiden Metallstempel wird von dem so erhaltenen Pigmentpressling der elektrische Widerstand R gemessen. Aus der Schichtdicke L und dem Durchmesser d des Pigmentpresslings sowie dem gemessenen Widerstand R errechnet sich der spezifische Pulverwiderstand $\rho$ des Pigments gemäß der Formel

$$\rho = [R \cdot \pi \cdot (d/2)^2]/L \qquad [Ohm \cdot cm].$$

Die Pigmentvolumenkonzentration ergibt sich aus dem Volumen der halbleitenden Pigmente geteilt durch das Gesamtvolumen der Beschichtung oder des Artikels, bestehend aus Bindemittel, halbleitendes Pigment und ggf. Füllstoffe und weitere Additive, der Quotient multipliziert mit 100 und ausgedrückt in %.

In einer bevorzugten Ausführung bestehen die halbleitenden Pigmente aus Glimmerplättchen, die mit Zinndioxid beschichtet sind, wobei das Zinndioxid auch dotiert sein kann. Die Zinndioxidschicht ist vorzugsweise dotiert, muss aber nicht dotiert sein. Gegebenenfalls genügt eine Aktivierung des halbleitenden Zinndioxids, um eine Leitfähigkeit für einen spezifischen Pulverwiderstand von größer als 100 kOhm · cm zu erreichen. Ein solcher Aktivierungsschritt kann z. B. Glühen unter Stickstoff, Argon, $CO_2$ oder einem anderen Inertgas sein, Glühen unter schwach reduzierenden Bedingungen oder eine Belichtung mit UV-Licht. Hierbei geht das Zinndioxid in einen angeregten Zustand über, der durch Abkühlen eingefroren wird und für die geringe Leitfähigkeit verantwortlich ist. Vorzugsweise ist das Zinndioxid aber dotiert. Für die Dotierung sind Antimon und Fluor besonders geeignet. Besonders bevorzugt ist die Dotierung mit Antimon. Die Leitfähigkeit und damit der spezifische Pulverwiderstand ist auch abhängig von der Dicke der Zinndioxidschicht auf dem Träger. Vorzugsweise betrgät die Schichtdicke der Zinndioxidschicht 15 bis 50 nm.

Geeignete halbleitende Pigmente mit niedriger Leitfähigkeit ausgedrückt durch die spezifischen Pulverwiderstände von ≥ 100 kOhm · cm bis 100 MegaOhm · cm können aber auch durch Nachbeschichtung von leitfähigen Pigmenten mit einer dünnen oder nicht vollständig geschlossenen Schicht mit höherem Widerstand hergestellt werden. Eine solche Schicht kann zum Beispiel aus $SiO_2$ und/oder $Al_2O_3$, ZnO oder aus $TiO_2$ bestehen. Diese Beschichtungen sind dann dünner als die teilleitfähige Zinndioxidschicht auf einem Träger und können eine mittlere Dicke von 1 bis 15 nm, vorzugsweise 5 - 10 nm, aufweisen.

Es kommen aber auch organische Beschichtungen in Frage, wie sie z. B. zur Wetterstabilisierung und Hydrophobierung von anorganischen Pigmenten gebräuchlich sind. Typische Beispiele sind Beschichtungen mit organischen Silanen.

Die Methoden der Steuerung der Leitfähigkeiten über Nachbeschichtungen höher leitfähigerer Pigmente ist auch auf trägerfreie Zinndioxide und auf Gemische aus trägerfreien leitfähigen Pigmenten mit solchen auf Trägern anwendbar.

Eine weitere Methode zur Steuerung der Leitfähigkeiten und der Einstellung von spezifischen Pulverwiderständen von ≥ 100 kOhm*cm ist die Co-Dotierung mit Ionen, die die Leitfähigkeit herabsetzen, zum Beispiel durch Bildung von Elektronenfallen im Kristallgitter oder durch Herabsetzung der Elektronenbeweglichkeit im Kristall. Beispiele für solche Ionen, durch welche die Leitfähigkeit von antimondotiertem Zinndioxid herabgesetzt wird, sind Natrium oder Titan.

Weitere Möglichkeiten zur Einstellung einer definierten niedrigen Leitfähigkeit bestehen in der Wahl der Trocknungs- und Glühparameter, z. B. Temperatur, Zeit und Zusammensetzung und Druck der Atmosphäre.

Neben Zinndioxid eignen sich noch andere halbleitenden Metalloxide und solche Metalloxidschichten auf Trägern für die Herstellung der erfindungsgemäßen dielektrischen Beschichtungen. Beispiele für solche Metalloxide sind ggf. dotiertes Titandioxid, ggf. dotiertes Zinkoxid oder Zinkstannat.

Als halbleitende Pigmente kommen ausdrücklich auch Mischungen von Pigmenten mit unterschiedlichen spezifischen Pulverwiderständen in Frage. So kann beispielsweise ein halbleitendes oder leitfähiges Pigment mit einem spezifischen Pulverwiderstand von weniger als 100 kOhm*cm mit einem oder mehreren halbleitenden Pigment mit einem spezifischen Pulverwiderstand von über 100 kOhm*cm so abgemischt werden, dass die Mischung einen spezifischen Pulverwiderstand von ≥ 100 kOhm*cm aufweist. Ob die Pigmente als Pulver vorgemischt werden oder getrennt in den entsprechenden Verhältnissen der Beschichtungszubereitung zugesetzt werden, ist dabei unerheblich. Durch Mischen von halbleitenden Pigmenten unterschiedlicher spezifischer Pulverwiderstände lässt sich auf elegante Weise mit wenigen Pigmenten ein breiter Bereich von dielektrischen Beschichtungen mit unterschiedlichen Oberflächenwiderständen ein-

4

stellen.

In einer besonders bevorzugten Ausführungsform wird als leitfähige Schicht, ggf. auf einem plättchenförmigen Substrat,

- Antimon dotiertes Zinndioxid,
- Fluor dotiertes Zinndioxid,
- Chlor dotiertes Zinndioxid,
- Wolfram dotiertes Zinndioxid,
- Molybdän dotiertes Zinndioxid,
- Antimon und Titan dotiertes Zinndioxid,
- Antimon und Eisen dotiertes Zinndioxid, oder
- Antimon und Phosphor dotiertes Zinndioxid,

eingesetzt.

Insbesondere bevorzugt ist eine leitfähige Schicht bestehend aus mit Antimon dotiertem Zinnoxid. Das Molverhältnis Zinn zu Dotierstoff, insbesondere Antimon, in dieser bevorzugten Ausführungsform beträgt 99,99 : 0,01 - 97 :3, insbesondere 99,8 : 0,2 - 99 :1.

Das halbleitfähige Pigment setzt sich vorzugsweise zusammen aus 40-80 Gew.% Substrat und 20-60 Gew.% halbleitender Schicht, wobei die Summe aus Substrat und halbleitender Schicht 100 Gew.% ergibt.

Besonders bevorzugt sind halbleitfähige Pigmente aus 40-80 % Glimmer und zu 20-60 Gew.% aus der dotierten Zinndioxid-Schicht. Die Zinndioxidmenge ist dabei abhängig von der spezifischen Oberfläche des verwendeten Substrats.

Ganz besonders bevorzugte Pigmente bestehen aus Glimmerplättchen der Teilchengröße < 15 $\mu$m, beschichtet mit in der Regel 35-60 Gew.% an dotiertem Zinndioxid bezogen auf das Gesamtpigment. Besitzen dagegen die Glimmerplättchen eine Teilchengröße von < 60 $\mu$m, vorzugsweise 10-60 $\mu$m, enthalten die Pigmente vorzugsweise 20-40 Gew.% Zinndioxid bezogen auf das Gesamtpigment.

Die Angabe der Teilchengröße bezieht sich auf das $d_{90}$ bei einer volumengewichteten Messung mittels Laserbeugung, z. B. mit einem Mastersizer 2000 der Firma Malvern bestimmt. Die mittlere Teilchengröße $d_{50}$ der besonders bevorzugten Pigmente liegt zwischen 2 und 8 $\mu$m. Solche Pigmente zeigen in den Anwendungen häufig Vorteile bezüglich des Absetzverhaltens, der Dispergierbarkeit und/oder der Homogenität der Beschichtungen.

Die Schichtdicke der leitfähigen Schicht beträgt vorzugsweise 20-70 nm, insbesondere 30-40 nm.

Die Nachbeschichtung von halbleitfähigen Pigmenten mit einer dünnen Schicht eines dielektrischen oder weiteren halbleitenden Materials ist häufig vorteilhaft für die Einstellung höherer Widerstände.

Insbesondere bevorzugt ist die Applikation einer dünnen Schicht aus $TiO_2$, $ZnO$, $Al_2O_3$, $Cr_2O_3$ oder $SiO_2$ auf der halbleitenden Schicht. Die Schichtdicken sind in der Regel < 0,1 $\mu$m, vorzugsweise < 0,05 $\mu$m. Vorzugsweise ist die Menge des dielektrischen oder halbleitenden Materials bezogen auf die leitfähige Schicht 0,5 -5 Gew.%.

Besonders bevorzugte halbleitfähige Pigmente weisen folgenden Schichtaufbau auf einem Substratplättchen auf:

Substrat + $SnO_2$ (dotiert)

Substrat + $SnO_2$ (dotiert) + $TiO_2$

Substrat + $SnO_2$ (dotiert) + $SiO_2$

Substrat + $SnO_2$ (dotiert) + $ZnO$

Substrat + $SnO_2$ (dotiert) + $Al_2O_3$

Substrat + $SnO_2$ (dotiert) + $Cr_2O_3$

Substrat + $SiO_2$+$SnO_2$ (dotiert)

Substrat + $TiO_2$+$SnO_2$ (dotiert).

Ganz besonders bevorzugte halbleitfähige Pigmente besitzen folgenden Aufbau:

Glimmerplättchen + $SnO_2$ (dotiert)

Glimmerplättchen + $SnO_2$ (dotiert) + $TiO_2$

Glimmerplättchen + $SnO_2$ (dotiert) + $SiO_2$

Glimmerplättchen + $SnO_2$ (dotiert) + ZnO

Glimmerplättchen + $SnO_2$ (dotiert) + $Al_2O_3$

$Al_2O_3$-Plättchen + $SnO_2$ (dotiert)

$Al_2O_3$-Plättchen + $SnO_2$ (dotiert) + $TiO_2$

$Al_2O_3$-Plättchen + $SnO_2$ (dotiert) + $SiO_2$

$Al_2O_3$-Plättchen + $SnO_2$ (dotiert) + ZnO

$Al_2O_3$-Plättchen + $SnO_2$ (dotiert) + $Al_2O_3$.

Bei der Dotierung in einer bevorzugten Ausführungsform handelt es sich vorzugsweise um Antimonoxid.

In einer besonders bevorzugten Ausführungsform werden niederohmige halbleitende Pigmente verwendet, die vorzugsweise auf Glimmerplättchen basieren, insbesondere Glimmerplättchen mit Teilchengrößen < 15 $\mu$m. Ganz besonders bevorzugt sind Glimmerplättchen mit Teilchengrößen < 15 $\mu$m, die bezogen auf das Substrat, mit 70 Gew.% einer leitfähigen Schicht, vorzugsweise Zinndioxid, belegt sind, wobei die leitfähige Schicht mit 1 Gew.% Antimon, bezogen auf die leitfähige Schicht, dotiert ist. Auf diese Weise erhält man niederohmige Varistorpigmente, die einen spezifischen Oberflächenwiderstand in einer Beschichtung von $10^8$ Ohm und einen Nichtlinearitätskoeffizient Alpha von 4,5 bei einer Feldstärke von 200 V/mm aufweisen.

Hochohmige Pigmente bestehen vorzugsweise aus Glimmerplättchen mit Teilchengrößen < 15 $\mu$m. Ganz besonders bevorzugt sind Glimmerplättchen mit Teilchengrößen < 15 $\mu$m, die bezogen auf das Substrat, mit 70 Gew.% zunächst mit einer leitfähigen Schicht, vorzugsweise Zinndioxid, belegt sind, wobei die leitfähige Schicht mit 0,25 Gew.% Antimon, bezogen auf die leitfähige Schicht, dotiert ist und nachfolgend eine $TiO_2$-Schicht aufweisen, wobei der Gehalt an $TiO_2$ 1,4 Gew.% bezogen auf das Substrat beträgt. Der spezifische Oberflächenwiderstand einer Pigment enthaltenden Beschichtung beträgt $10^{12}$ Ohm und der Nichtlinearitätskoeffizient Alpha ist 4.

In der vorliegenden Anmeldung bezieht sich niederohmig auf den Widerstand eines dielektrischen Isolierstoffes und ist wie folgt definiert: Der spezifische Oberflächenwiderstand einer Beschichtung bestehend aus einem Bindemittel und dem halbleitenden Pigment bei einer (Pigmentvolumenkonzentration (PVK) von 11 - 20 % beträgt $10^7$ bis $10^9$ Ohm*cm.

In der vorliegenden Anmeldung ist hochohmig wie folgt definiert:
Der spezifische Oberflächenwiderstand einer Beschichtung bestehend aus einem Bindemittel und Pigment bei einer PVK von 12 - 20 % beträgt $10^{11}$ bis $10^{13}$ Ohm*cm.

Die Schichtdicken der Beschichtungen sind größer als 10 $\mu$m, vorzugsweise größer als 20 $\mu$m.

Für die Herstellung der erfindungsgemäßen Beschichtungen oder Gegenstände ist nicht die Zusammensetzung des Pigments entscheidend, sondern der spezifische Pulverwiderstand des eingesetzten Pigments bzw. des Pigmentgemisches. Beschichtungen sind beispielsweise dünne oder dicke Lackschichten, aufgedruckte Schichten oder Pulverlackschichten. Gegenstände sind beispielsweise Folien, Bänder, Platten, gewickelte Folien und Bänder, Formkörper, wie z.B. Isolatorköpfe, aber auch lackierte Teile.

Gegenstand der vorliegenden Erfindung ist auch die Verwendung der erfindungsgemäßen Beschichtungen bei Sensoren, z. B. in einem flächigen Berührungssensor, in Sicherheitsanwendungen, wie z. B. verdeckte maschinenlesbare Streifen in Ausweiskarten, die über elektrische Eigenschaften erkannt werden, für Fußbodenbeläge, Folien, von keramischen Materialien, von Gläsern, von Papier, bei der Lasermarkierung, im Wärmeschutz, bei Photohalbleitern und als Funktionswerkstoffe für die Hochspannungstechnik. Insbesondere geeignet ist die erfindungsgemäße Beschichtung zur gezielten Einstellung der elektrischen Eigenschaften von Endenglimmschutzsystemen, insbesondere solchen bei rotierenden elektrischen Maschinen.

Insbesondere werden für den Endenglimmschutz Materialien verwendet, deren elektrische Leitfähigkeit sich mit der elektrischen Feldstärke erhöht. Eine Kenngröße für die nichtlineare elektrische Leitfähigkeit des Materials ist die Stromdichte-Feldstärke-Kennlinie. Die Stromdichte-Feldstärke-Kennlinie hat in der Regel einen S-förmigen Verlauf, wobei versucht wird, den Betriebspunkt des Endenglimmschutzes im Bereich des Wendepunkts der S-förmigen Kurve zu legen. Im Bereich des Wendepunkts ist der Verlauf der Kennlinie im Wesentlichen linear und durch ihre Steigung charakterisiert, wenn die Stromdichte-Feldstärke-Kennlinie doppelt logarithmisch aufgetragen ist.

Herkömmlich ist der Endenglimmschutz von einem auf die Hauptisolierung aufgebrachten Band oder Lack gebildet, wobei das Band oder der Lack von einer Polymermatrix gebildet ist, in die halbleitfähige Pigmente eingebettet sind, wobei die Steigung der doppelt logarithmisch aufgetragenen Stromdichte-Feldstärke-Kennlinie, genannt als der Nichtlinearitätsexponent Alpha, etwa 3,3 beträgt. In Abhängigkeit der Korngröße und der Partikeldichte der Pigmente in der Polymermatrix entstehen an den Berührungspunkten der Partikel leitfähige Übergänge, so dass sich in dem Endenglimmschutz Strompfade ausbilden können. Die Art und Anzahl dieser Strompfade bestimmt maßgeblich die Lage der Stromdichte-Feldstärke-Kennlinie bzw. den spezifischen elektrischen Widerstand des Endenglimmschutzes.

Eine so vorgegebene Materialwunschkennlinie kann durch halbleitfähige Pigmente realisiert werden. Hierbei legen die Pigmente die Steigung der doppelt logarithmisch aufgetragenen Stromdichte-Feldstärke-Kennlinie im Designpunkt fest.

Für die Herstellung der erfindungsgemäßen Beschichtungen und Gegenstände ist, wie oben erwähnt, nicht die Zusammensetzung des halbleitfähigen Pigments entscheidend, sondern der spezifische Pulverwiderstand des Pigments bzw. des Pigmentgemisches.

Die nachfolgenden Beispiele sollen die Erfindung näher erläutern.

**Beispiele**

Beispiele 1 - 4

100 g gemahlener und klassierter natürlicher Glimmer mit einer Teilchengröße von < 15 $\mu$m werden in 1900 ml VE-Wasser suspendiert. Im Sauren wird die Suspension bei 75 °C unter Rühren mit einer 50 Gew.%igen wässrigen $SnCl_4$-Lösung, HCl und einer 35 Gew.%igen wässrigen $SbCl_3$-Lösung tropfenweise versetzt. Durch gleichzeitige geregelte Zudosierung von Natronlauge wird der pH-Wert konstant gehalten. Nach Zugabe der Gesamtmenge der Lösung wird noch 30 min bei 75 °C nachgerührt, anschließend unter Rühren auf Raumtemperatur abgekühlt und die Reaktionsmischung neutralisiert. Das erhaltene Pigment wird über eine Nutsche abfiltriert, mit Wasser gewaschen, bei 140 °C getrocknet und 30 min. bei 800 °C geglüht. Man erhält 178 g in Abhängigkeit vom Antimongehalt hellgraues bis ockergelbes Pigmentpulver (ca. 99 % d. Th.). In den Versuchen 1 - 4 werden über die Variation des Antimongehaltes im Zinnoxid die Pulverwiderstände der Pigmente variiert, wie in Tabelle 1 dargestellt.

Zur Messung des spezifischen Widerstandes eines Pigmentpulvers wird eine Menge 0,5 bis 3 g des Pigmentes in ein Acrylglas-Rohr mit dem Innendurchmesser von 2 cm gefüllt und zwischen zwei gegenüberliegenden Metallstempeln mit Hilfe eines Gewichtes von 10 kg liegenden Metallstempeln mit Hilfe eines Gewichtes von 10 kg zusammengepresst. Durch Anlegen eines Ohmmeters an die beiden Metallstempel wird von dem so erhaltenen Pigmentpressling der elektrische Widerstand R gemessen. Aus der Schichtdicke L und dem Durchmesser d des Pigmentpresslings sowie dem gemessenen Widerstand R errechnet sich der spezifische Widerstand $\rho$ des Pigments gemäß der Formel

$$\rho = [R \cdot \pi \cdot (d/2)^2]/L \qquad [Ohm \cdot cm].$$

Tabelle 1

| Beispiele | Mol% Sb | $\rho$ [Ohm $\cdot$ cm] |
|---|---|---|
| Beispiel 1 | 15 | 28 |
| Beispiel 2 | 8 | 68 |
| Beispiel 3 | 1,0 | $2,5 \times 10^6$ |
| Beispiel 4 | 0,2 | $30 \times 10^6$ |

Herstellung des Nitrocelluloselackes:

0,5 kg Kollodiumwolle werden in einer Mischung aus 2,1 kg n-Butylacetat, und 1,5 kg Ethylacetat gelöst. Anschließend wird eine Lösung von 0,65 kg Acronal 700 L in 0,65 kg Ethylacetat und 0,6 kg Toluol eingerührt. Anschließend wird die Viskosität des Lackes gemessen und gegebenenfalls durch Zugabe einer Mischung von 1,4 Teilen n-Butylacetat und 1 Teil Ethylacetat auf einen Wert zwischen 1,9 und 2,1 Pa $\cdot$ s eingestellt.

Beispiel 5: Herstellung von teilleitfähigen Lackfilmen

Mit den Pigmenten aus den Beispielen 1 - 4 (B1-B4) werden Lackfilme mit unterschiedlichen Pigmentvolumenkonzentrationen hergestellt. Dazu werden die Pigmente in den oben genannten Nitrocelluloselack eindispergiert. Mit den so erhalten Lacken werden mit einer Filmziehmaschine mit Kammerrakel Glasplatten beschichtet. Die Schichtdicke der trockenen Filme beträgt 50 $\mu$m. Durch Eindispergieren unterschiedlicher Mengen der Pigmente werden Lackfilme mit unterschiedlicher Pigmentvolumenkonzentration hergestellt.

Die beschichteten Glasplatten werden an der Luft im Dunkeln getrocknet und bei 40 % Luftfeuchtigkeit konditioniert. Auf die Beschichtung werden mit Silberleitlack 5900 der Fa. Busch und Kupferfolie 3 Paare von 10 cm langen Elektroden mit einem Abstand von 1 cm aufgebracht. Die Widerstände Ro zwischen den Elektroden werden mit einem Teraohmmeter vom Typ Metriso 5000D-PI mit einer Arbeitsspannung von 1000 V nach 8 Stunden, 24 Stunden und 48 Stunden vermessen. Widerstände von weniger als $10^7$ Ohm werden mit einer Arbeitsspannung von 100 V gemessen.

Der spezifische Oberflächenwiderstand $\sigma$ errechnet sich gemäß der Formel

$$\sigma = Ro^* \text{ Elektrodenlänge/Elektrodenabstand } [\Omega]$$

Der Zielwert für den spezifischen Oberflächenwiderstand $\sigma$ ist der Bereich zwischen 1 und 1000 Gigaohm; die Abweichungen des Widerstandes von Abweichungen in der Zusammensetzung der Schicht sollen möglichst gering sein.

Die Ergebnisse sind in Tabelle 2 aufgelistet.

Tabelle 2

| Versuch | 5.1 | 5.2 | 5.3 | 5.4 | 5.5 | 5.6 | 5.7 | 5.8 |
|---|---|---|---|---|---|---|---|---|
| Pigment | B1 | B1 | B1 | B1 | B2 | B2 | B2 | B2 |
| PVK[%] | 9,8 | 11 | 13 | 18 | 9,8 | 11 | 13 | 18 |
| $\sigma$ (8h) | $>10^{12}$ | $>10^{12}$ | $8*10^{9}$ | $2*10^{4}$ | $>10^{12}$ | $>10^{12}$ | $5*10^{10}$ | $6*10^{4}$ |
| $\sigma$ (24 h) | $>10^{12}$ | $2*10^{10}$ | $5*10^{7}$ | $1*10^{4}$ | $>10^{12}$ | $8*10^{10}$ | $2*10^{8}$ | $4*10^{4}$ |
| $\sigma$ (48 h) | $1*10^{11}$ | $6*10^{9}$ | $1*10^{7}$ | $8*10^{3}$ | $>10^{12}$ | $7*10^{10}$ | $6*10^{7}$ | $3*10^{4}$ |
| Versuch | 5.9 | 5.10 | 5.11 | 5.12 | 5.13 | 5.14 | 5.15 | 5.16 |
| Pigment | B3 | B3 | B3 | B3 | B4 | B4 | B4 | B4 |
| PVK[%] | 9,8 | 11 | 13 | 18 | 9,8 | 11 | 13 | 18 |
| $\sigma$ (8h) | $>10^{12}$ | $>10^{12}$ | $4*10^{10}$ | $2*10^{9}$ | $>10^{12}$ | $>10^{12}$ | $1*10^{11}$ | $4*10^{10}$ |
| $\sigma$ (24 h) | $>10^{12}$ | $>10^{12}$ | $2*10^{10}$ | $1*10^{9}$ | $>10^{12}$ | $9*10^{10}$ | $5*10^{10}$ | $3*10^{10}$ |
| $\sigma$ (48 h) | $>10^{12}$ | $8*10^{10}$ | $1*10^{10}$ | $8*10^{8}$ | $>10^{12}$ | $8*10^{10}$ | $3*10^{10}$ | $2*10^{10}$ |

Die Versuche mit einer Pigmentvolumenkonzentration von weniger als 10 % liegen alle oberhalb des gewünschten Widerstandsbereichs, unabhängig davon, welchen spezifischen Pulverwiderstand das Pigment hat. Das System befindet sich unterhalb der Perkolationsschwelle.

Bei den höheren Pigmentvolumenkonzentrationen wird ein Abfall der Widerstände mit der Zeit beobachtet. Dieser ist Folge der Ausdunstung von Restlösemitteln aus den teilleitfähigen Lackfilmen und führt zu geringen Veränderungen in den Pigmentvolumenkonzentrationen, die durch das Ausdunsten der Lösemittelreste ansteigen. Diese führen im gewünschten Widerstandsbereich von 1 bis 1000 Gigaohm ($10^9$ bis $10^{12}$ Ohm) zu Veränderungen der Widerstände. Die Pigmente B1 und B2 mit spezifischen Pulverwiderständen von << 100 kOhm zeigen in dem gewünschten Bereich der Oberflächenwiderstände erhebliche Änderungen von ca. 2 Zehnerpotenzen, während die Pigmente B3 und B4 Änderungen im Rahmen von nur einer Zehnerpotenz aufweisen. Das zeigt, dass die erfindungsgemäßen Zusammensetzungen deutlich weniger anfällig sind gegenüber Schwankungen in der Zusammensetzung der Schichten.

Betrachtet man die Veränderung der spezifischen Widerstände $\sigma$ in Abhängigkeit von den Pigmentvolumenkonzentrationen nach dem vollständigen Ablüften der Lösemittelreste nach 48 h, dann wird deutlich, dass bei den Lackfilmen mit den Vergleichspigmenten B1 und B2 die Widerstände um 6 Zehnerpotenzen abnehmen, während bei den erfindungsgemäßen Lackfilmen mit den Pigmenten B3 und B4 die Widerstände nur um 1 - 2 Zehnerpotenzen abnehmen. Der Vergleich macht deutlich, dass bei den erfindungsgemäßen Zubereitungen die Widerstände sehr viel weniger abhängig sind von den Pigmentvolumenkonzentrationen und damit viel besser eingestellt und konstant gehalten werden können.

**Patentansprüche**

1. Dielektrische Beschichtungen und Gegenstände, **dadurch gekennzeichnet, dass** die Beschichtungen und Gegenstände jeweils mit spezifischen Oberflächenwiderständen von größer oder gleich $10^8$ Ohm ein oder mehrere halbleitende Pigmente, ein dielektrisches Bindemittel und ggf. weitere dielektrische Additive, enthalten, wobei die Pigmentvolumenkonzentration des halbleitenden Pigments in der dielektrischen Beschichtung oder im Gegenstand $\geq$ 10 % ist, das halbleitende Pigment aus Zinnoxid, dotiertem Zinndioxid, mit Zinnoxid oder dotiertem Zinndioxid beschichteten Trägern, dotiertem Titandioxid, Titansuboxid oder mit Titandioxid oder Titansuboxid beschichteten Trägern besteht und die halbleitenden Pigmente einen spezifischen Pulverwiderstand im Bereich von 100 kOhm bis 100 Megaohm*cm aufweisen, wobei zur Messung des spezifischen Widerstandes ein Acrylglas-Rohr mit dem Innendurchmesser von 2 cm mit einer Füllhöhe 0,5 bis 1 cm des Pigmentes gefüllt wird, das zwischen zwei gegenüberliegenden Metallstempeln mit Hilfe eines Gewichtes von 10 kg zusammengepresst wird, und danach durch Anlegen eines Ohmmeters an die beiden Metallstempel von dem so erhaltenen Pigmentpressling der elektrische Widerstand R gemessen wird, und aus der Schichtdicke L und dem Durchmesser d des Pigmentpresslings sowie dem gemessenen Widerstand R errechnet sich der spezifische Pulverwiderstand $\rho$ des Pigments gemäß der Formel

$$\rho = [R \cdot \pi \cdot (d/2)2]/L \qquad [Ohm \cdot cm].$$

2. Dielektrische Beschichtungen und Gegenstände nach Anspruch 1, **dadurch gekennzeichnet, dass** der spezifische Pulverwiderstand des halbleitenden Pigments $\geq$ 100 kOhm $\cdot$ cm und kleiner 1 Gigaohm $\cdot$ cm ist.

3. Dielektrische Beschichtungen und Gegenstände nach Anspruch 1 oder 2, **dadurch gekennzeichnet, dass** der spezifische Pulverwiderstand des halbleitenden Pigments größer als 100 kOhm $\cdot$ cm und kleiner 1 Gigaohm $\cdot$ cm ist.

4. Dielektrische Beschichtungen und Gegenstände nach einem oder mehreren der Ansprüche 1 bis 3, **dadurch gekennzeichnet, dass** das halbleitende Pigment sich aus 40-80 % Substrat und 20-60 Gew.% halbleitender Schicht zusammensetzt, wobei die Summe aus Substrat und halbleitender Schicht 100 Gew.% ergibt.

5. Dielektrische Beschichtungen und Gegenstände nach einem oder mehreren der Ansprüche 1 bis 4, **dadurch gekennzeichnet, dass** das Pigment ausgewählt ist aus der Gruppe

   Glimmerplättchen + $SnO_2$-Schicht (dotiert)

   Glimmerplättchen + $SnO_2$-Schicht (dotiert) + $TiO_2$-Schicht

   Glimmerplättchen + $SnO_2$-Schicht (dotiert) + $SiO_2$-Schicht

   Glimmerplättchen + $SnO_2$-Schicht (dotiert) + ZnO-Schicht

   Glimmerplättchen + $SnO_2$-Schicht (dotiert) + $Cr_2O_3$-Schicht

   Glimmerplättchen + $SnO_2$-Schicht (dotiert) + $Al_2O_3$-Schicht

   $Al_2O_3$-Plättchen + $SnO_2$-Schicht (dotiert)

   $Al_2O_3$-Plättchen + $SnO_2$-Schicht (dotiert) + $TiO_2$-Schicht

   $Al_2O_3$-Plättchen + $SnO_2$-Schicht (dotiert) + $SiO_2$-Schicht

   $Al_2O_3$-Plättchen + $SnO_2$-Schicht (dotiert) + ZnO-Schicht

   $Al_2O_3$-Plättchen + $SnO_2$-Schicht (dotiert) + $Cr_2O_3$-Schicht

   $Al_2O_3$-Plättchen + $SnO_2$-Schicht (dotiert) + $Al_2O_3$-Schicht.

6. Verwendung der dielektrischen Beschichtungen und Gegenstände nach einem oder mehreren der Ansprüche 1 bis 5 bei Sensoren, in Sicherheitsanwendungen, für Fußbodenbeläge, für Folien, für keramische Materialien, bei Gläsern, von Papier, bei der Lasermarkierung, im Wärmeschutz, bei Photohalbleitern und als Funktionswerkstoffe für die Hochspannungstechnik.

7. Verwendung der dielektrischen Beschichtungen und Gegenstände nach Anspruch 6 in einem flächigen Berührungssensor.

8. Verwendung der dielektrischen Beschichtungen und Gegenstände nach Anspruch 6 zur gezielten Einstellung der elektrischen Eigenschaften von Endenglimmschutzsystemen bei rotierenden elektrischen Maschinen.

**Claims**

1. Dielectric coatings and articles, **characterised in that** the coatings and articles, in each case having specific surface resistances of greater than or equal to $10^8$ ohm, comprise one or more semiconducting pigments, a dielectric binder and optionally further dielectric additives, where the pigment volume concentration of the semiconducting pigment in the dielectric coating or in the article is $\geq 10\%$, the semiconducting pigment consists of tin oxide, doped tin dioxide, supports coated with tin oxide or doped tin dioxide, doped titanium dioxide, titanium suboxide, or supports coated with titanium dioxide or titanium suboxide and the semiconducting pigments have a specific powder resistance in the range from 100 kohm to 100 megaohm*cm, where, for measurement of the specific resistance, an acrylic glass tube having an internal diameter of 2 cm is filled with a fill depth of 0.5 to 1 cm of the pigment, which is compressed between two opposing metal rams with the aid of a weight of 10 kg, and the electrical resistance R of the pigment pressed disc obtained in this way is then measured by application of an ohmmeter to the two metal rams, and the specific powder resistance $\rho$ of the pigment is calculated from the layer thickness L and the diameter d of the pigment pressed disc and the measured resistance R, in accordance with the formula

$$\rho = [R \cdot \pi \cdot (d/2)^2]/L \qquad [ohm \cdot cm].$$

2. Dielectric coatings and articles according to Claim 1, **characterised in that** the specific powder resistance of the semiconducting pigment is $\geq$ 100 kohm $\cdot$ cm and less than 1 gigaohm $\cdot$ cm.

3. Dielectric coatings and articles according to Claim 1 or 2, **characterised in that** the specific powder resistance of the semiconducting pigment is greater than100 kohm $\cdot$ cm and less than 1 gigaohm $\cdot$ cm.

4. Dielectric coatings and articles according to one or more of Claims 1 to 3, **characterised in that** the semiconducting pigment is composed of 40-80% by weight of substrate and 20-60% by weight of semiconducting layer, where the sum of substrate and semiconducting layer is 100% by weight

5. Dielectric coatings and articles according to one or more of Claims 1 to 4, **characterised in that** the pigment is selected from the group

    mica flake + $SnO_2$ layer (doped)

    mica flake + $SnO_2$ layer (doped) + $TiO_2$ layer

    mica flake + $SnO_2$ layer (doped) + $SiO_2$ layer

    mica flake + $SnO_2$ layer (doped) + ZnO layer

    mica flake + $SnO_2$ layer (doped) + $Cr_2O_3$ layer

    mica flake + $SnO_2$ layer (doped) + $Al_2O_3$ layer

    $Al_2O_3$ flake + $SnO_2$ layer (doped)

    $Al_2O_3$ flake + $SnO_2$ layer (doped) + $TiO_2$ layer

    $Al_2O_3$ flake + $SnO_2$ layer (doped) + $SiO_2$ layer

Al$_2$O$_3$ flake + SnO$_2$ layer (doped) + ZnO layer

Al$_2$O$_3$ flake + SnO$_2$ layer (doped) + Cr$_2$O$_3$ layer

Al$_2$O$_3$ flake + SnO$_2$ layer (doped) + Al$_2$O$_3$ layer.

6. Use of the dielectric coatings and articles according to one or more of Claims 1 to 5 in sensors, in security applications, for floorcoverings, for films, for ceramic materials, in glasses, of paper, in laser marking, in thermal protection, in photosemiconductors and as functional materials for high-voltage technology.

7. Use of the dielectric coatings and articles according to Claim 6 in a flat contact sensor.

8. Use of the dielectric coatings and articles according to Claim 6 for the specific setting of the electrical properties of end corona shielding systems in rotating electrical machines.


**Revendications**

1. Revêtements et articles diélectriques, **caractérisés en ce que** les revêtements et articles, qui présentent dans chaque cas des valeurs de résistance spécifique supérieures ou égales à 10$^8$ ohms, comprennent un ou plusieurs pigment(s) de semiconduction, un agent de liaison diélectrique et en option, d'autres additifs diélectriques, où la concentration en volume de pigment du pigment de semiconduction dans le revêtement diélectrique ou dans l'article est ≥ 10 %, le pigment de semiconduction est constitué par de l'oxyde d'étain, du dioxyde d'étain dopé, des supports revêtus d'oxyde d'étain ou de dioxyde d'étain dopé, du dioxyde de titane dopé, du sous-oxyde de titane, ou des supports revêtus de dioxyde de titane ou de sous-oxyde de titane et les pigments de semiconduction présentent une valeur de résistance spécifique à l'état pulvérulent dans la plage de 100 kohms à 100 mégaohms*cm, où, pour la mesure de la valeur de résistance spécifique, un tube en verre acrylique qui présente un diamètre interne de 2 cm est rempli selon une profondeur de remplissage de 0,5 à 1 cm du pigment, lequel est comprimé entre deux moyens de compactage en métal opposés à l'aide d'un poids de 10 kg, et la valeur de résistance électrique R du disque pressé de pigment qui est obtenu de cette façon est ensuite mesurée au moyen de l'application d'un ohmmètre sur les deux moyens de compactage en métal, et la valeur de résistance spécifique à l'état pulvérulent ρ du pigment est calculée à partir de l'épaisseur L et du diamètre d du disque de pigment pressé ainsi que de la valeur de résistance R, conformément à la formule :

$$\rho = [R \cdot \pi \cdot (d/2)^2]/L \qquad [\text{ohms} \cdot \text{cm}].$$

2. Revêtements et articles diélectriques selon la revendication 1, **caractérisés en ce que** la valeur de résistance spécifique à l'état pulvérulent du pigment de semiconduction est ≥ 100 kohms · cm et inférieure à 1 gigaohm · cm.

3. Revêtements et articles diélectriques selon la revendication 1 ou 2, **caractérisés en ce que** la valeur de résistance spécifique à l'état pulvérulent du pigment de semiconduction est supérieure à 100 kohms · cm et inférieure à 1 gigaohm · cm.

4. Revêtements et articles diélectriques selon une ou plusieurs des revendications 1 à 3, **caractérisés en ce que** le pigment de semiconduction est composé de 40 % à 80 % en poids d'un substrat et de 20 % à 60 % en poids d'une couche de semiconduction, où la somme du substrat et de la couche de semiconduction est de 100 % en poids.

5. Revêtements et articles diélectriques selon une ou plusieurs des revendications 1 à 4, **caractérisés en ce que** le pigment est sélectionné parmi le groupe constitué par :

flocon de mica + couche de SnO$_2$ (dopé)

flocon de mica + couche de SnO$_2$ (dopé) + couche de TiO$_2$

flocon de mica + couche de SnO$_2$ (dopé) + couche de SiO$_2$

flocon de mica + couche de $SnO_2$ (dopé) + couche de ZnO

flocon de mica + couche de $SnO_2$ (dopé) + couche de $Cr_2O_3$

flocon de mica + couche de $SnO_2$ (dopé) + couche d'$Al_2O_3$

flocon d'$Al_2O_3$ + couche de $SnO_2$ (dopé)

flocon d'$Al_2O_3$ + couche de $SnO_2$ (dopé) + couche de $TiO_2$

flocon d'$Al_2O_3$ + couche de $SnO_2$ (dopé) + couche de $SiO_2$

flocon d'$Al_2O_3$ + couche de $SnO_2$ (dopé) + couche de ZnO

flocon d'$Al_2O_3$ + couche de $SnO_2$ (dopé) + couche de $Cr_2O_3$

flocon d'$Al_2O_3$ + couche de $SnO_2$ (dopé) + couche d'$Al_2O_3$.

**6.** Utilisation des revêtements et articles diélectriques selon une ou plusieurs des revendications 1 à 5 dans les capteurs, dans les applications de sécurité, pour les revêtements de sol, pour les films, pour les matériaux en céramique, dans les verres, le papier, au niveau du marquage au laser, au niveau de la protection thermique, dans les photosemiconducteurs et en tant que matériaux fonctionnels pour la technologie des hautes tensions.

**7.** Utilisation des revêtements et articles diélectriques selon la revendication 6 dans un capteur de contact plat.

**8.** Utilisation des revêtements et articles diélectriques selon la revendication 6 pour le réglage spécifique des propriétés électriques des systèmes de protection terminaux vis-à-vis de l'effet corona dans les machines électriques tournantes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1118086 B1
- US 4207482 A
- DE 3842330
- DE 4237990
- EP 0139557 A
- EP 0359569 A
- EP 0743654 A, DuPont
- US 7416688 B
- DE 19839285

**In der Beschreibung aufgeführte Nicht-Patentliteratur**

- **ANDREAS KÜCHLER.** Hochspannungstechnik. Springer Verlag, 2009